# EUROPEAN PATENT APPLICATION

(11) **EP 2 575 393 A2**
(43) Date of publication of application: **03.04.2013**
(21) Application number: 12006807.7
(22) Date of filing: 28.09.2012
(51) Int. Cl.: H04W 36/00

(54) **Base station and transmission path creation method thereof**

(30) Priority: 01.10.2011 US 201161542154 P; 05.03.2012 US 201261606505 P
(71) Applicant: Institute for Information Industry, Taipei (TW)
(72) Inventor: Wu, Chih-Chiang, Taichung City Taiwan (TW); Loa, Kanchei, Zhongshan District Taipei City Taiwan (TW); Liu, Shu-Tsz, Xinyi District Taipei City Taiwan (TW); Hsu, Hsien-Tsung, Neihu District Taipei City Taiwan (TW)
(74) Representative: Bobbert & Partner

(57) **Abstract**

A base station and a transmission path creation method for use in a network system are provided. A first packet data network (PDN) connection has been built among an user equipment serving gateway (UE-SGW), a first relay gateway, a first packet data network gateway (P-GW), a first serving gateway (S-GW), a first E-UTRAN Node B (eNodeB) and the relay node of the network system. The base station comprises a second relay gateway, a second P-GW, a second S-GW, and a second eNodeB. The second eNodeB and a relay node execute a handover procedure according to a handover request. The network system performs a transmission path creation procedure so that a second PDN connection is formed among the UE-SGW, the second relay gateway, the second P-GW, the second S-GW, a second eNodeB and the relay node.

## Description

### BACKGROUND OF THE INVENTION

### Field of the Invention

The present invention relates to a base station and a transmission path creation method thereof; and more particularly, the base station and the transmission path creation method thereof according to the present invention are adapted to process transmission paths of stations after handover.

### Descriptions of the Related Art

With the rapid development of science and technologies, wireless communication technologies have been widely applied in various environments. In order to provide a wider service scope, the primary wireless communication technologies all adopt relay technologies to provide a handover mechanism for moving stations and to correspondingly process transmission paths of the stations after handover. However, for the stations moving at a high speed, the conventional processing mechanism has shortcomings. Now, the shortcomings of the conventional processing mechanism in the high-speed moving environment will be described with the Long Term Evolution (LTE) technology as an example.

In the LTE architecture, a relay node (RN) may be deployed in a carriage of a train moving at a high speed to serve user equipment (UE) in the carriage. As the train moves rapidly, the relay node is necessarily handed over to other base stations successively. In the LTE architecture, each base station comprises a relay gateway, an eNode B, a serving gateway and a packet data network gateway. At an initial stage, the relay node connects with an initial base station, and transmits data via the serving gateway and the packet data network gateway of the initial base station. As the train moves, the relay node is handed over to a target base station, and then transmits data via the eNode B of the target base station and the serving gateway and the packet data network gateway of the initial base station. Alternatively, after being handed over to the target base station, the relay node transmits data via the eNode B and the serving gateway of the target base station and the packet data network gateway of the initial base station. However, no matter which manner is adopted, the data must be transmitted via the packet data network gateway of the initial base station in the prior art. As the train moves continuously, the distance between the target base station and the initial base station increases and, consequently, the data transmission path is elongated, thereby causing a long transmission delay.

In view of this, an urgent need exists in the art to enable stations moving at a high speed to transmit data efficiently after handover.

### SUMMARY OF THE INVENTION

To solve the aforesaid problem, the present invention provides a base station and a transmission path creation method thereof.

The base station of the present invention is for use in a network system. The network system comprises the base station, a relay node, a user equipment serving gateway (UE-SGW), a first relay node mobility management entity (RN-MME), a first relay gateway, a first packet data network gateway (P-GW), a first serving gateway (S-GW) and a first E-UTRAN Node B (eNode B). A first packet data network (PDN) connection is formed among the UE-SGW, the first relay gateway, the first P-GW, the first S-GW, the first eNode B and the relay node. The relay node communicates data with the UE-SGW via the first PDN connection.

The base station comprises a second eNode B, a second relay gateway, a second P-GW and a second S-GW. The second eNode B is configured to execute a handover procedure with the relay node according to a handover request. The second relay gateway is configured to create a connection with the UE-SGW after the handover procedure. The second P-GW is configured to create a connection with the second relay gateway after the handover procedure. The second S-GW is configured to execute a connection establish procedure with the second P-GW and to create a connection with the second eNode B after the handover procedure.

Thereby, the relay node communicates data with the UE-SGW via a second PDN connection after the handover procedure. The second PDN connection is formed among the UE-SGW, the second relay gateway, the second P-GW, the second S-GW, the second eNode B and the relay node.

The transmission path creation method of the present invention is adapted for use in a base station of a network system. The network system comprises the base station, a relay node, a UE-SGW, an RN-MME, a first relay gateway, a first P-GW, a first S-GW and a first eNode B. A first PDN connection is formed among the UE-SGW, the first relay gateway, the first P-GW, the first S-GW, the first eNode B and the relay node communicating data with the UE-SGW via the first PDN connection. The base station comprises a second eNode B, a second relay gateway, a second P-GW and a second S-GW.

The transmission path creation method comprises the following steps of: executing, by the second eNode B, a handover procedure with the relay node according to a handover request; creating a connection between the second relay gateway and the UE-SGW after the handover procedure; creating a connection between the second P-GW and the second relay gateway after the handover procedure; executing a connection establish procedure between the second S-GW and the second P-GW after the handover procedure; creating a connection between the second S-GW and the second eNode B after the handover procedure.

Thereby, the relay node can communicate data with the UE-SGW via a second PDN connection after the handover procedure. The second PDN connection is formed among the UE-SGW, the second relay gateway, the second P-GW, the second S-GW, the second eNode B and the relay node.

As can be known from the above descriptions, the base station and the transmission path creation method thereof according to the present invention create a new PDN connection for a relay node after the relay node is handed over to the base station. Therefore, even though the distance from the relay node to the initial base station becomes too long due to movement of the train, the relay node can still transmit data via the new PDN connection. Thus, the problem with the prior art that the transmission path of the PDN connection becomes increasingly longer is solved, and the efficiency of data transmission is further improved.

The detailed technology and preferred embodiments implemented for the subject invention are described in the following paragraphs accompanying the appended drawings for people skilled in this field to well appreciate the features of the claimed invention.

### BRIEF DESCRIPTION OF THE DRAWINGS

**FIG. 1A** depicts a schematic view of a network system **1** of the present invention;
**FIG. 1B** depicts a functional block diagram of the network system 1 of the present invention;
**FIG. 2A** and **FIG. 2B** depict schematic views of signal transmissions according to a second embodiment;
**FIG. 3A** depicts a schematic view of a network system 3 according to the present invention;
**FIG. 3B** depicts a functional block diagram of the network system 3 according to the present invention;
**FIG. 3C** and **FIG. 3D** depict schematic views of signal transmissions according to a third embodiment of the present invention;
**FIG. 4A** depicts a schematic view of signal transmissions according to a fourth embodiment of the present invention;
**FIG. 4B** depicts a schematic view of correspondence relationships between data stored in a UE-MME and a relay node identification and a user equipment identification;
**FIG. 5** depicts a schematic view of signal transmissions according to a fifth embodiment of the present invention;
**FIG. 6** depicts a flowchart diagram of a sixth embodiment and a seventh embodiment of the present invention;
**FIG. 7** depicts a flowchart diagram of an eighth embodiment of the present invention; and
**FIG. 8** depicts a flowchart diagram of a ninth embodiment of the present invention.

### DESCRIPTION OF THE PREFERRED EMBODIMENT

In the following descriptions, the base station and the transmission path creation method thereof according to the present invention will be explained with reference to embodiments thereof. However, these embodiments are not intended to limit the present invention to any specific environment, applications or particular implementations described in these embodiments. Therefore, description of these embodiments is only for purpose of illustration rather than to limit the present invention. It shall be appreciated that, in the following embodiments and the attached drawings, elements not directly related to the present invention are omitted from depiction.

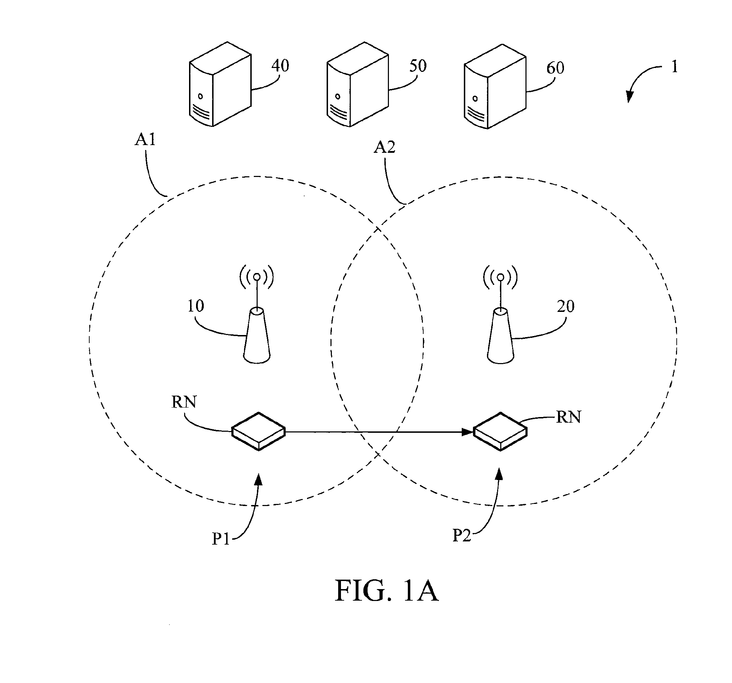

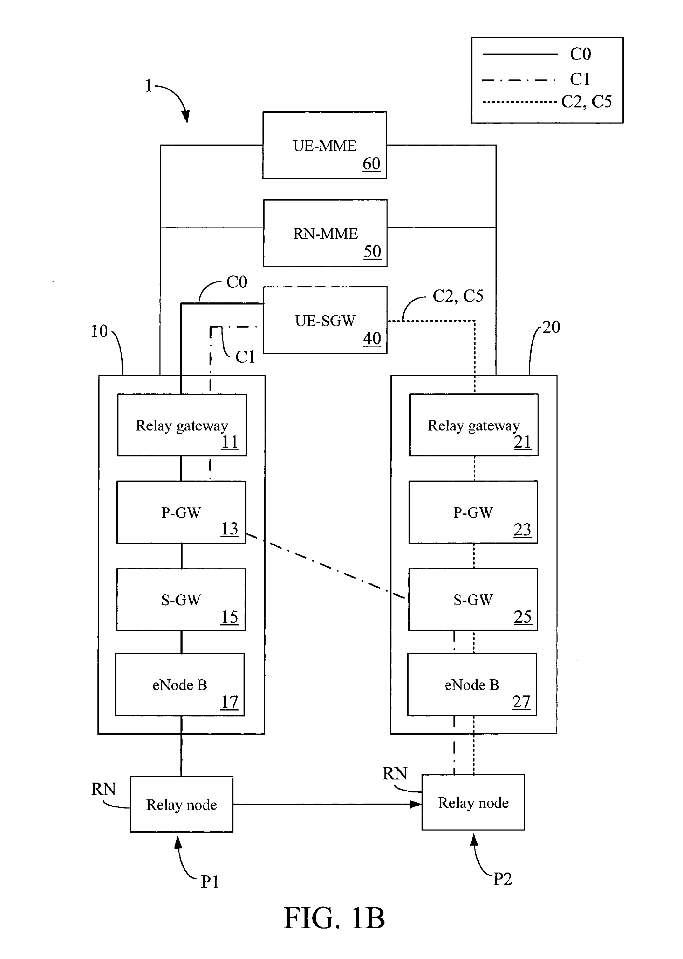

Referring to **FIG. 1A** and **FIG. 1B****,** a first embodiment of the present invention is depicted therein. **FIG. 1A** depicts a schematic view of a network system 1 according to the first embodiment, and **FIG. 1B** depicts a functional block diagram of stations comprised in the network system **1.** The network system **1** comprises a plurality of base stations **10, 20,** a user equipment serving gateway (UE-SGW) **40,** a relay node mobility management entity (RN-MME) **50,** a user equipment mobility management entity (UE-MME) **60** and a relay node **RN.** The base stations **10, 20** have signal coverages **A1, A2** respectively.

The base station **10** comprises a relay gateway **11,** a packet data network gateway (P-GW) **13,** a serving gateway (S-GW) **15** and an E-UTRAN Node B (eNode B) **17;** and the base station **20** comprises a relay gateway **21,** a P-GW **23,** a S-GW **25** and an eNode B **27.**

The relay node **RN** is deployed in an environment (e.g., a carriage of a train) moving at a high speed. The relay node **RN** moves together as the train moves. Initially, the relay node **RN** is located at a position **P1** within the signal coverage **A1,** so it is served by the base station **10.** Specifically, a packet data network (PDN) connection **C0** is formed among the UE-SGW **40,** the relay gateway **11,** the P-GW **13,** the S-GW **15,** the eNode B **17** and the relay node **RN.** When being located in the signal coverage **A1,** the relay node **RN** communicates data with the UE-SGW **40** via the PDN connection **C0.**

The relay node **RN** then moves from the position **P1** towards a position **P2** within the signal coverage **A2.** After the relay node **RN** moves into the signal coverage **A2,** the eNode B **27** executes a handover procedure with the relay node **RN** according to a handover request, and the base station **20** executes a data transmission path creation procedure so that the relay node **RN** can be served by the base station **20.** Therefore, in this embodiment, the base station **10** may be viewed as an initial base station (i.e., a base station that is initially connected with the relay node **RN)** and a source base station (i.e., a base station that is currently connected with the relay node **RN),** and the base station **20** may be viewed as a target base station (i.e., a base station that is to be connected with the relay node **RN).**

Specifically, the eNode B **27** executes the handover procedure with the relay node **RN** and the base station **10** according to the handover request.

After the handover procedure, a connection is created between the relay gateway **21** and the UE-SGW **40,** a connection is created between the P-GW **23** and the relay gateway **21,** a connection establish procedure (e.g. a proxy binding update procedure or a create session procedure) is executed between the S-GW **25** and the P-GW **23,** and a connection is also created between the S-GW **25** and the eNode B **27.**

Through the aforesaid procedure, a PDN connection **C2** is formed among the UE-SGW **40,** the relay gateway **21,** the P-GW **23,** the S-GW **25,** the eNode B **27** and the relay node **RN.** Then, if the relay node **RN** and user equipment (UE) that it serves need to create a new connection after the handover procedure, the relay node **RN** can communicate data with the UE-SGW **40** via the PDN connection **C2.**

The PDN connection **C0** that is initially created is also adjusted. The eNode B **27** transmits a connection path switch request to the RN-MME **50** so that a relay node path switch procedure is executed among the eNode B **27,** the S-GW **25,** eNode B **17,** the S-GW **15,** the P-GW **13** and the RN-MME **50** according to the connection path switch request. Through the relay node path switch procedure, the PDN connection **C0** that is initially created is changed to be formed among the UE-SGW **40,** the relay gateway **11,** the P-GW **13,** the S-GW **25,** the eNode B **27** and the relay node **RN** instead (e.g., a PDN connection **C1** shown in **FIG. 1B****).**

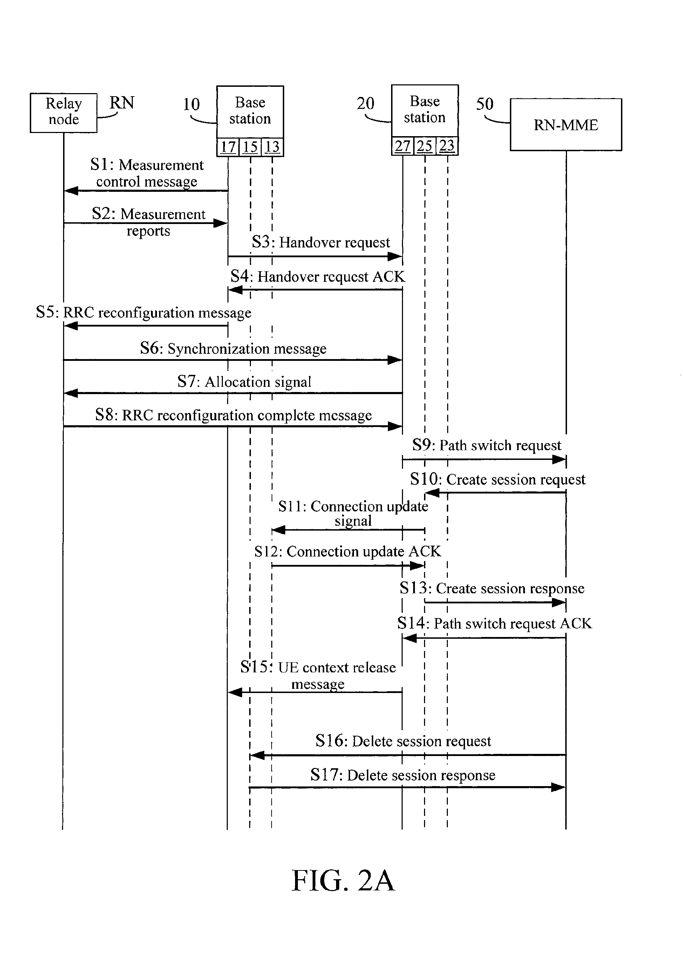

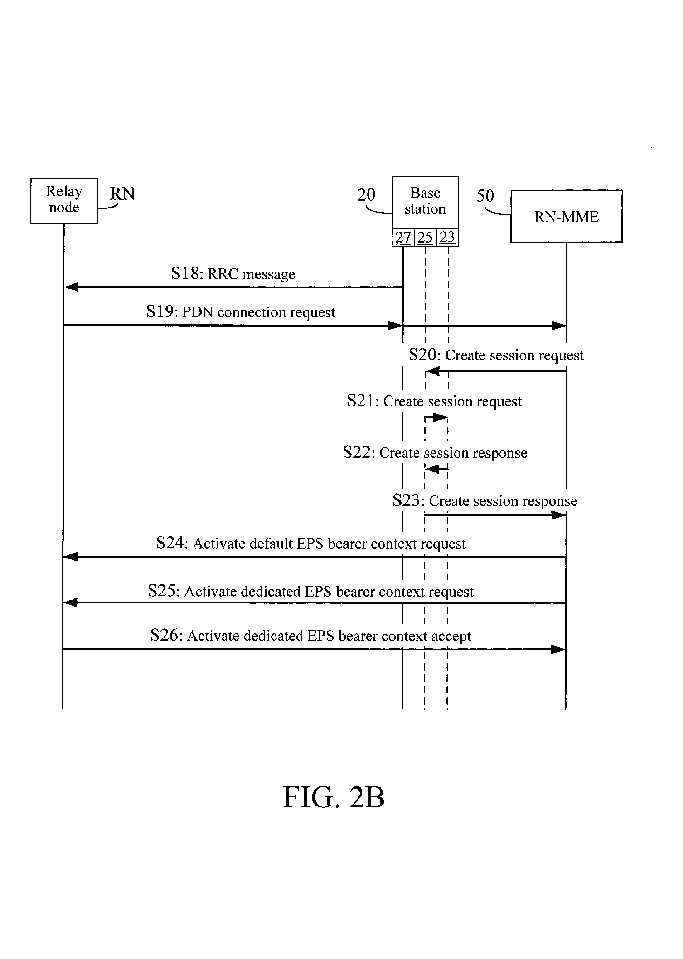

A second embodiment of the present invention is also a network system **1.** However, the network system **1** conforms to the Long Term Evolution (LTE) standard. In this case, the base stations **10, 20** may each be a Donor E-UTRAN NodeB (DeNB). **FIG. 2A** and **FIG. 2B** depict schematic views of signal transmissions according to the second embodiment.

Firstly, referring to **FIG. 2A****,** the handover procedure executed by the network system **1** conforming to the LTE standard is illustrated by signals **S1∼S8.** The base station **10** (i.e., the source station) firstly sets an interval at which the relay node **RN** needs to report signal conditions and sets the type of signals, and the eNode B **17** of the base station **10** transmits a measurement control message **S1** to the relay node **RN.** The relay node **RN** measures the signal strength of the nearby base station according to the measurement control message **S1,** and transmits a measurement reports **S2** to the eNode B **17** of the base station **10.** Then, the base station **10** determines to hand over the relay node **RN** to the base station **20** (i.e., the target base station) according to the measurement report **S2.**

Next, the eNode B **17** of the base station **10** transmits a handover request **S3** to the eNode B **27** of the base station **20.** Messages carried in the handover request **S3** include a message for notifying the base station **20** that the equipment to be handed over is a relay node, and include a context related to the relay node **RN** and the UEs served by the relay node **RN.** The base station **20** determines, according to the handover request **S3,** that its own resources are sufficient for the relay node **RN** and the UEs served by the relay node **RN,** so the eNode B **27** of the base station **20** transmits a handover request acknowledgement **S4** to the eNode B **17** of the base station **10.** The handover request acknowledgement **S4** at least carries a subframe allocation instruction and a handover random access identification (ID) that is allocated to the relay node **RN.**

Thereafter, the eNode B **17** of the base station **10** transmits a radio resource control (RRC) reconfiguration message **S5** to the relay node **RN.** After receiving the RRC reconfiguration message **S5,** the relay node **RN** is switched into a random access mode. Next, the relay node **RN** transmits a synchronization message **S6** to the eNode B **27** of the base station **20** via a channel corresponding to the handover random access ID. Then, the eNode B **27** transmits an allocation signal **S7** to the relay node **RN.** The allocation signal **S7** comprises an uplink allocation grant message and a timing advanced command. The relay node **RN** transmits an RRC reconfiguration complete message **S8** to the eNode B **27** according to the allocation signal **S7.**

Next, how the RN-MME **50,** the eNode B **27,** the S-GW **25,** eNode B **17,** the S-GW **15** and the P-GW **13** execute a relay node path switch procedure through signals **S9∼S17** to adjust the initially created PDN connection **C0** will be described.

Firstly, the eNode B **27** transmits a path switch request **S9** to the RN-MME **50.** Then, the RN-MME **50** transmits a create session request **S10** to the S-GW **25.** Subsequently, the S-GW **25** transmits a connection update signal **S11** to the P-GW **13,** and the base station **10** updates a context field thereof according to the connection update signal **S11.** Then, the P-GW **13** returns a connection update acknowledgement **S12** to the S-GW **25.**

If the network system **1** adopts the proxy mobile Internet protocol (PMIP), then the connection update signal **S11** and the connection update acknowledgement **S12** are a proxy binding update signal and a proxy binding acknowledgement respectively. If the network system **1** adopts the GPRS Tunnelling Protocol (GTP) protocol of the LTE standard, then the connection update signal **S11** and the connection update acknowledgement **S12** are a modify bearer request and a modify bearer response respectively.

Upon receiving the connection update acknowledgement **S12,** the S-GW **25** returns a create session response **S13** to the RN-MME **50.** Then, the RN-MME **50** returns a path switch request acknowledgement **S14** to the eNode B **27.** Next, the eNode B **27** transmits a UE context release message **S15** to the eNode B **17** so that the base station **10** deletes the context related to the relay node **RN** according to the UE context release message **S15.** Then, the RN-MME **50** transmits a delete session request **S16** to the S-GW **25,** and the S-GW **25** returns a delete session response **S17** to the RN-MME **50.**

As can be known from the above descriptions, the initially created PDN connection **C0** is changed to be formed among the UE-SGW **40,** the relay gateway **11,** the P-GW **13,** the S-GW **25,** the eNode B **27** and relay node **RN** instead (e.g., the PDN connection **C1** shown in **FIG. 1B****)** after the relay node path switch procedure is executed by the RN-MME **50,** the eNode B **27,** the S-GW **25,** eNode B **17,** the S-GW **15** and the P-GW **13** through the signals **S9∼S17.**

Next, the following description will focus on how to create a PDN connection **C2** (i.e., a PDN connection that is newly created) between the UE-SGW **40** and the relay node **RN** so that, if the relay node **RN** and the UEs served by the relay node **RN** need to transmit data when the relay node **RN** is located within the signal coverage **A2** of the base station **20,** the data can be transmitted via the PDN connection **C2.**

Firstly, the eNode B **27** relays a PDN connection request between the relay node **RN** and the RN-MME **50** by means of an access point name (APN). Specifically, the eNode B **27** of the base station **20** transmits the APN of the P-GW **23** to the relay node **RN** by means of an RRC message **S18.** Then, the relay node **RN** transmits a PDN connection request **S19** comprising the APN to the eNode B **27** so that the eNode B **27** relays the PDN connection request **S19** to the RN-MME **50.**

Then, the connection establish procedure is executed between the S-GW **25** and the P-GW **23.** Specifically, the RN-MME **50** transmits a create session request **S20** to the S-GW **25,** which then transmits a create session request **S21** to the P-GW **23;** and the P-GW **23** returns a create session response **S22** to the S-GW **25,** which then returns a create session response **S23** to the RN-MME **50.**

Then, the eNode B **27** executes the evolved packet system (EPS) bearer creation procedure with the relay node **RN** and the RN-MME **50.** Specifically, the RN-MME **50** transmits an activate default EPS bearer context request **S24** to the relay node **RN** to preset the created PDN connection **C2** as a default transmission path of UEs that are served by the relay node **RN** when being located within the signal coverage **A2.** Next, the RN-MME **50** transmits an activate dedicated EPS bearer context request **S25** to the relay node **RN,** and the activate dedicated EPS bearer context request **S25** can designate more than one dedicated evolved PDN connection. Subsequently, the relay node **RN** designates in the activate dedicated EPS bearer context request **S25** one of the more than one dedicated evolved PDN connection, and then returns an activate dedicated EPS bearer context accept message **S26.**

Through signals **S18**∼**S26,** the PDN connection **C2** is formed among the UE-SGW **40,** the relay gateway **21,** the P-GW **23;** the S-GW **25,** the eNode B **27** and the relay node **RN.** Thereafter, if the UEs served by the relay node **RN** are to create a new PDN connection when the relay node **RN** is still located within the signal coverage **A2,** the relay node **RN** will transmit data of the UEs via the PDN connection **C2.**

In addition to the aforesaid steps, the second embodiment can also execute all the operations and functions set forth in the first embodiment. How the second embodiment executes these operations and functions can be readily appreciated by those of ordinary skill in the art based on the explanation of the first embodiment, and thus will not be further described herein.

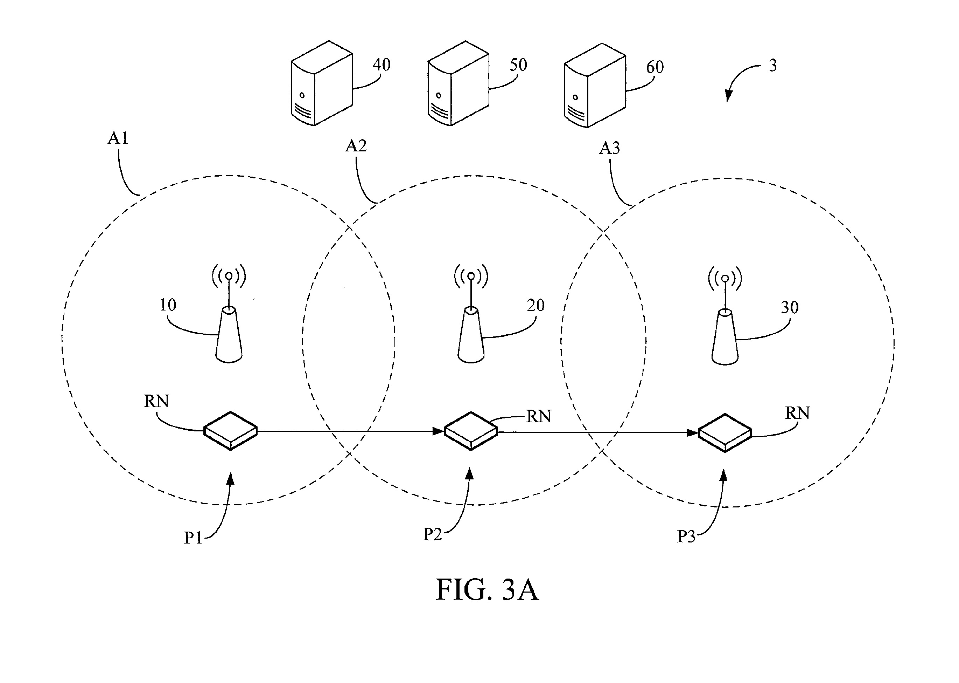

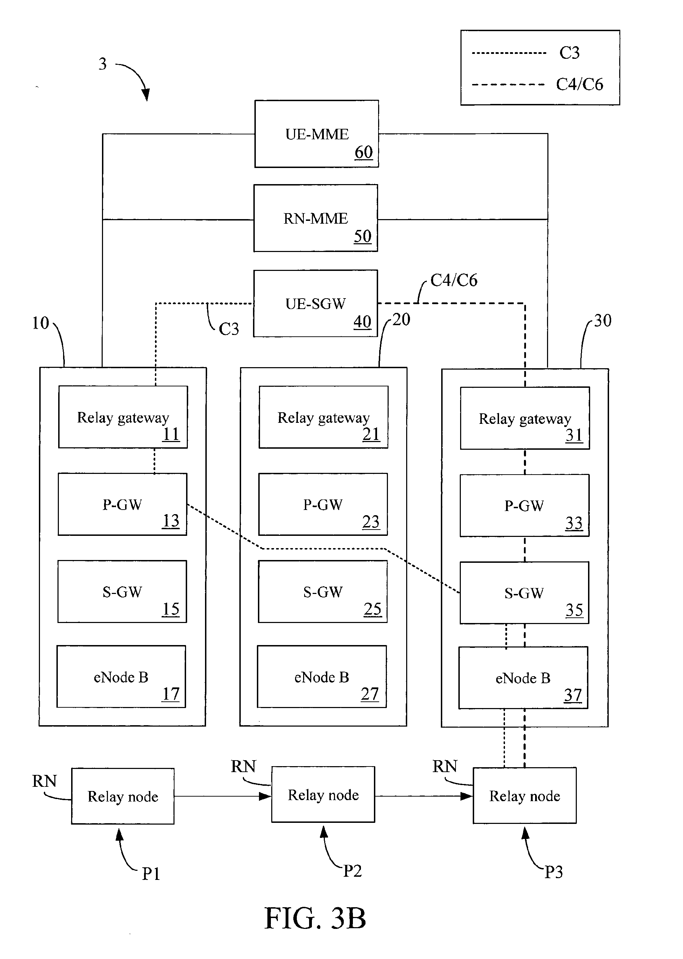

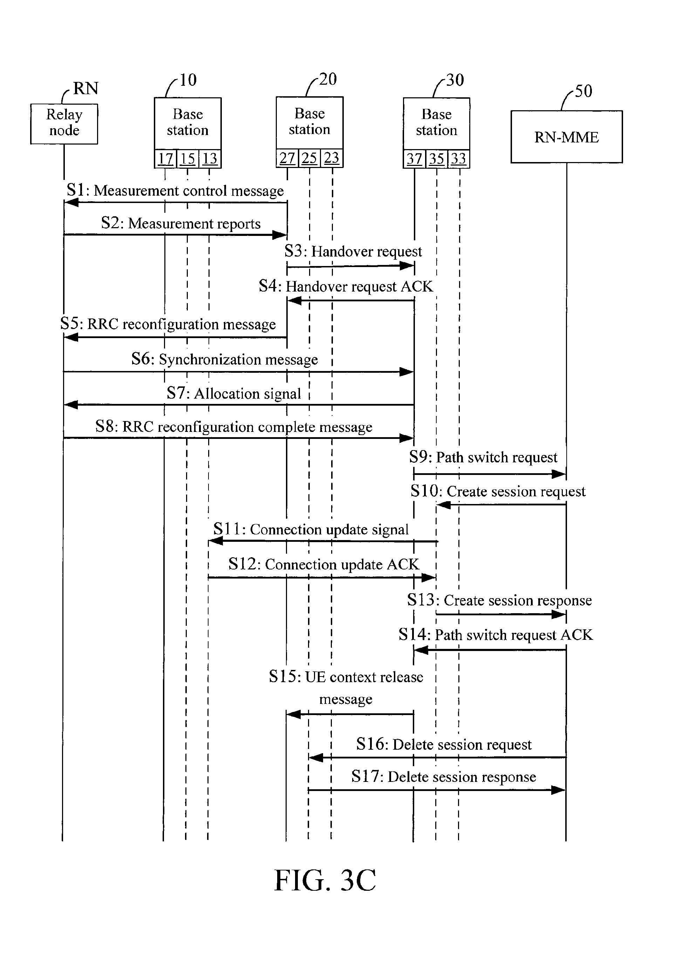

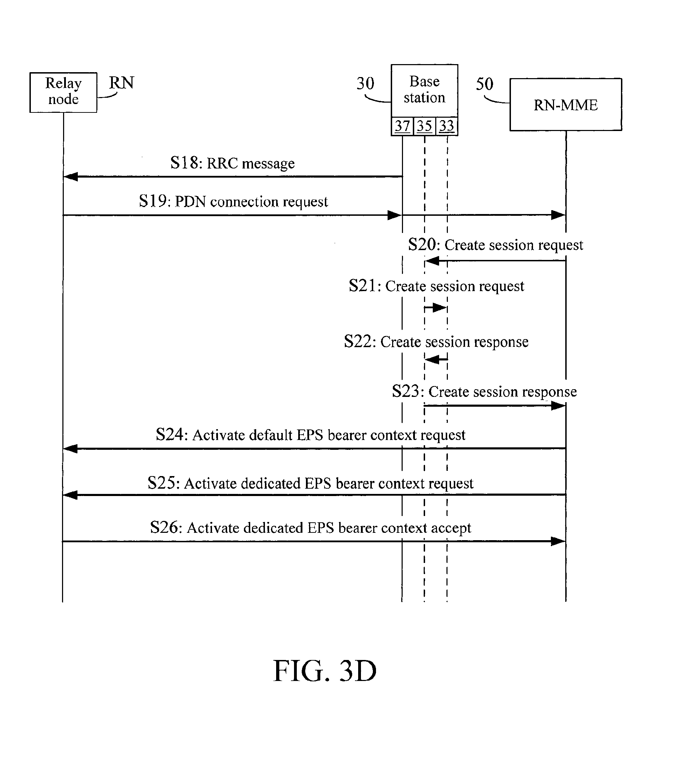

Referring to **FIG. 3A****,** **FIG. 3B****,** **FIG. 3C** and **FIG. 3D****,** a third embodiment of the present invention is depicted therein. **FIG. 3A** depicts a schematic view of a network system **3** of the third embodiment; **FIG. 3B** depicts a functional block diagram of stations comprised in the network system **3;** and **FIG. 3C** and **FIG. 3D** depict schematic views of signal transmissions of this embodiment.

In addition to all of the devices and the stations comprised in the network system **1,** the network system **3** further comprises a base station **30.** Furthermore, the network system **3** conforms to the LTE standard. The base station **30** has a signal coverage **A3,** and comprises a relay gateway **31,** a P-GW **33,** an S-GW **35** and an eNode B **37.** Likewise, the devices and the modules of the base station **30** have the same functions and can execute the same operations as those of the base stations **10, 20.**

In this embodiment, the relay node **RN** moves from a position **P1** to a position **P2,** and then moves from the position **P2** to a position **P3** within the signal coverage **A3.** As the procedures that need to be executed when the relay node **RN** moves from the position **P1** to the position **P2** have been described in the first and the second embodiments, the following description will only focus on procedures that need to be executed when the relay node **RN** moves from the position **P2** to the position **P3.**

When the relay node **RN** is at the position **P2,** the relay node **RN** and the UEs served by the relay node **RN** use the PDN connections **C1, C2** as shown in **FIG. 1****B.** The PDN connection **C1** is formed among the UE-SGW **40,** the relay gateway **11,** the P-GW **13,** the S-GW **25** and the eNode B **27,** and the PDN connection **C2** is formed among the UE-SGW **40,** the relay gateway **21,** the P-GW **23,** the S-GW **25,** the eNode B **27** and the relay node **RN.**

When the relay node **RN** moves from the position **P2** to the position **P3,** the base stations **10, 20, 30** may be viewed as an initial base station, a source base station and a target base station respectively. Because the base station **30** is the target base station, the operations executed by the target base station (i.e., the base station **20)** in the first and the second embodiments will be executed by the base station **30** in this embodiment.

Refer to **FIG. 3C** and **FIG. 3D****,** which are schematic views of signal transmissions. This embodiment uses the same signal designations as the first and the second embodiments, so the signals with the same designations will not be further described herein. The following description will only focus on differences of this embodiment from the first and the second embodiments.

Refer to **FIG. 3C** firstly. Firstly, the eNode B **37** executes a handover procedure with the relay node **RN** and the base station **20** through signals **S1∼S8.** Specifically, the eNode B **27** of the base station **20** firstly transmits a measurement control message **S1** to the relay node **RN;** then, the relay node **RN** transmits a measurement report **S2** to the eNode B **27;** and the base station **20** determines to hand over the relay node **RN** to the base station **30** according to the measurement report **S2.**

Next, the eNode B **27** of the base station **20** transmits a handover request **S3** to the eNode B **37** of the base station **30.** The base station **30** determines that it can execute a handover procedure with the relay node **RN** according to the contents of the handover request **S3,** so the eNode B **37** of the base station **30** returns a handover request acknowledgement **S4** to the eNode B **27.**

Subsequently, the eNode B **27** transmits an RRC reconfiguration message **S5** to the relay node **RN** so that the relay node **RN** is switched into a random access mode according to the RRC reconfiguration message **S5.** Next, the relay node **RN** transmits a synchronization message **S6** to the eNode B **37** via a channel corresponding to the handover random access ID. Then, the eNode B **37** returns an allocation signal **S7** to the relay node **RN,** and the relay node **RN** further transmits an RRC reconfiguration complete message **S8** to the eNode B **37.**

Next, how the RN-MME **50,** the eNode B **37,** the S-GW **35,** the eNode B **27,** the S-GW **25** and the P-GW **13** execute a relay node path switch procedure through signals **S9**∼**S17** to adjust the PDN connection **C1** will be described.

Firstly, the eNode B **37** transmits a path switch request **S9** to the RN-MME **50,** and the RN-MME **50** further transmits a create session request **S10** to the S-GW **35.** Then, the S-GW **35** transmits a connection update signal **S11** to the P-GW **13,** and the P-GW **13** returns a connection update acknowledgement **S12** to the S-GW **35.**

Subsequently, the S-GW **35** returns a create session response **S13** to the RN-MME **50,** which then returns a path switch request acknowledgement **S14** to the eNode B **37.** Next, the eNode B **37** transmits a UE context release message **S15** to the eNode B **27.** Then, the RN-MME **50** transmits a delete session request **S16** to the S-GW **25,** and the S-GW **25** returns a delete session response **S17** to the RN-MME **50.**

As can be known from the above descriptions, the PDN connection **C1** is changed to be formed among the UE-SGW **40,** the relay gateway **11,** the P-GW **13,** the S-GW **35,** the eNode B **37** and the relay node **RN** instead (e.g., a PDN connection **C3** shown in **FIG. 3B****)** after the relay node path switch procedure is executed by the RN-MME **50,** the eNode B **37,** the S-GW **35,** the eNode B **27,** the S-GW **25** and the P-GW **13** through the signals **S9∼S17.**

Thus, when the relay node **RN** moves from the position **P2** to the position **P3,** the data transmission that is originally carried out via the PDN connection **C1** will be carried out via the PDN connection **C3** instead. For the PDN connection **C2,** it will also be changed through the same process flow in this embodiment, and this will not be further described herein.

Furthermore, a new PDN connection **C4** is further created between the UE-SGW **40** and the relay node **RN,** as shown in **FIG. 3D****.** For the creation of the PDN connection **C4,** reference may be made to the explanation of the first and the second embodiments and the signal transmissions of **FIG. 3C****.** With respect to operations of creating the new PDN connection **C4,** this embodiment differs from the first and the second embodiments in that the transmission path is created by the relay node **RN,** the base station **30** and the RN-MME **50;** however, the signals **S18∼S26** used in this embodiment are the same as those described previously and, thus, will not be further described herein.

Thereafter, if the UEs served by the relay node **RN** are to create a new PDN connection when the relay node **RN** is located within the signal coverage **A3,** the relay node **RN** will transmit data of the UEs via the PDN connection **C4.**

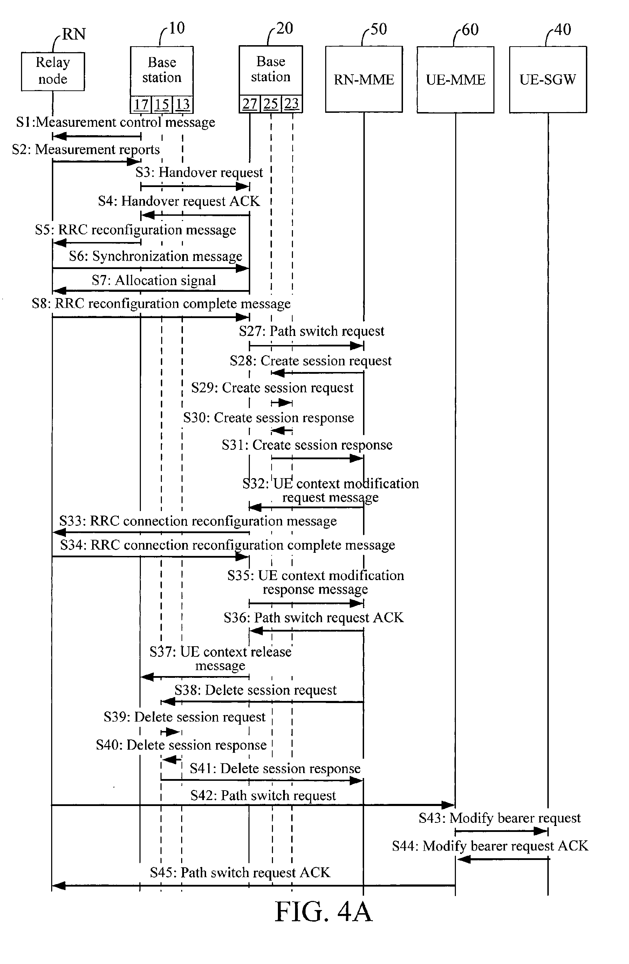

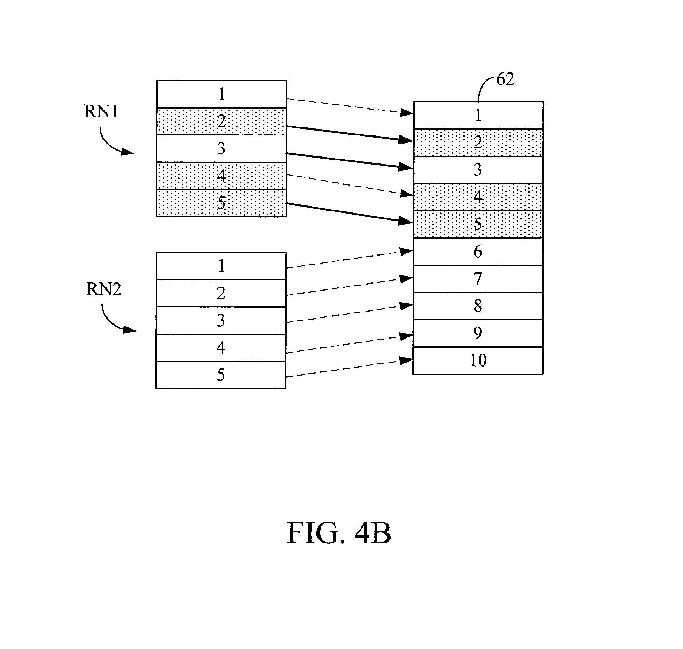

Refer to **FIG. 1A****,** **FIG. 1B****,** **FIG. 4A** and **FIG. 4B** for a fourth embodiment of the present invention. The fourth embodiment is also adapted for use in the network system **1** shown in **FIG. 1A****.** The fourth embodiment differs from the second embodiment in how to change the original PDN connection (e.g., the PDN connection **C0).** Briefly speaking, the P-GW **13** used by the PDN connection **C0** is not changed in the second embodiment; however, in the fourth embodiment, the P-GW **13** used by the PDN connection **C0** will also be changed.

Referring to **FIG. 4A****,** a handover procedure is also executed through the signals **S1∼S8** in this embodiment. Execution of the signals **S1∼S8** is the same as that of the second embodiment and, thus, will not be further described herein.

Next, how the UE-SGW **40,** the RN-MME **50,** the UE-MME **60,** the eNode B **17,** the S-GW **15,** the P-GW **13,** the eNode B **27,** the S-GW **25,** the P-GW **23** and the relay node **RN** execute a relay node path switch procedure through signals **S27-S45** will be described.

Firstly, the eNode B **27** transmits a path switch request **S27** to the RN-MME **50.** The path switch request **S27** comprises an Internet protocol (IP) address of the S-GW **25** that is embedded in the base station **20.** Subsequently, the RN-MME **50** transmits a create session request **S28** to the S-GW **25,** and the S-GW **25** transmits a create session request **S29** to the P-GW **23.** Then, the P-GW **23** allocates a new IP address to the relay node **RN,** and the new IP address is placed in a create session response **S30** which is then transmitted by the P-GW **23** to the S-GW **25.** A connection establish procedure can be established between the S-GW **25** and the P-GW **23** through the signals **S29∼S30.**

Then, the S-GW **25** transmits to the RN-MME **50** a create session response **S31** carrying the new IP address of the relay node **RN.** At this point, the RN-MME **50** transmits the new IP address of the relay node **RN** to the relay node **RN,** which will be described as follows. The RN-MME **50** transmits a UE context modification request message **S32** carrying a non-access stratum (NAS) signal to the eNode B **27.** The NAS signal carries an activate default EPS bearer context request. Then, the eNode B **27** transmits an RRC connection reconfiguration message **S33** carrying the activate default EPS bearer context request to the relay node **RN.**

Next, the relay node **RN** transmits to the eNode B **27** an RRC connection reconfiguration complete message **S34** carrying an activate default EPS bearer context accept message of an NAS signal. Subsequently, the eNode B **27** transmits to the RN-MME **50** a UE context modification response message **S35** carrying the activate default EPS bearer context accept message. After the new IP address of the relay node **RN** is transmitted to the relay node **RN** by the RN-MME **50,** the RN-MME **50** returns a path switch request acknowledgement **S36** to the eNode B **27,** and the eNode B **27** then transmits a UE context release message **S37** to the eNode B **17** so that the base station **10** deletes the context of the relay node **RN** according to the UE context release message **S37.**

Then, the RN-MME **50** transmits a delete session request **S38** to the S-GW **15** so that, according to the delete session request **S38,** the base station **10** deletes the PDN connection and the context created for the relay node **RN.** Furthermore, the S-GW **15** transmits a delete session request **S39** to the P-GW **13** so that the P-GW **13** deletes the PDN connection and the context created for the relay node **RN.** Then, the P-GW **13** transmits a delete session response **S40** to the S-GW **15,** which then returns a delete session response **S41** to the RN-MME **50.**

Thereafter, the relay gateway **21** further executes a UE path switch procedure with the relay node **RN,** the UE-MME **60** and the UE-SGW **40,** which will be detailed as follows.

The relay node **RN** transmits a path switch request **S42** comprising a group ID through the relay gateway **21** to the UE-MME **60.** Subsequently, the UE-MME **60** transmits a modify bearer request **S43** to the UE-SGW **40;** and then according to the group ID carried in the modify bearer request, the UE-SGW **40** determines which UEs of the relay node **RN** will switch their connection paths from the base station **10** to the base station **20.** Then, the UE-SGW **40** transmits a modify bearer request acknowledgement **S44** to the UE-MME **60.** Finally, the UE-SGW **40** adds an end marker in the data finally transmitted, and stops transmitting data related to the UEs served by the relay node **RN** to the base station **10.** After receiving the modify bearer request acknowledgement **S44,** the UE-MME **60** returns a path switch request acknowledgement **S45** through the relay gateway **21** to the relay node **RN.**

It shall be particularly appreciated that, the UE context release message **S37** may be transmitted after the path switch request acknowledgement **S36** or after the path switch request acknowledgement **S45.**

Through the aforesaid procedure, the PDN connection **C0** has been changed to be formed among the UE-SGW **40,** the relay gateway **21,** the P-GW **23,** the S-GW **25,** the eNode B **27** and the relay node **RN** instead (e.g., a PDN connection **C5** shown in **FIG. 1B****).** The UEs served by the relay node **RN** then transmit data via the PDN connection **C5.**

It shall be particularly appreciated that, because the P-GW of the original PDN connection is changed in this embodiment, all the UEs served by the relay node **RN** must have the UE IDs thereof changed, and this would lead to a large number of signallings in the core network to cause congestion of the core network. The present invention also provides a solution to this, that is, changes the paths of the UEs in the form of a group (replacing the UE IDs with a group ID), with the group ID being carried in the aforesaid path switch request **S42.** Hereinbelow, two implementations of the group ID will be described.

In a first implementation, a relay node ID is used as the group ID, and a database **62** of the UE-MME **60** stores the UE IDs and an index of the corresponding relay node ID. Therefore, when the path switch request **S42** is executed, path switch can be executed simultaneously for all the UEs served by the relay node **RN** simply according to the relay node ID. In other words, there is no need to switch the paths one by one through use of the UE IDs.

In a second implementation, the relay node ID and a bit map are used as the group ID so that path switch can be executed for only some of the UEs of the relay node **RN.** If this implementation is adopted, then the database **62** of the UE-MME **60** needs to record the relay node ID and the UE IDs. One of the recording manners is shown in **FIG. 4****B.**

Suppose that the network system comprises two relay nodes **RN1, RN2.** The relay node **RN1** serves five UEs, which are represented by serial numbers 1∼5 respectively; and the relay node **RN2** also serves five UEs, which are also represented by serial numbers 1∼5 respectively. **FIG. 4B** depicts correspondence relationships between the serial numbers and the indices in the database **62.** That is, the indices **1∼5** correspond to the five UEs **1∼5** served by the relay node **RN1** respectively, and the indices **6∼10** correspond to the five UEs **1∼5** served by the relay node **RN2** respectively in the database **62.**

For example, if the paths of the UEs **2, 4** and **5** served by the relay node **RN1** need to be changed now, then the group ID carried in the path switch request **S42** must comprise the relay node ID of the relay node **RN1** and a bit map. The bit map is configured to represent serial numbers (i.e., **2, 4** and **5)** in the database **62** of the UE-MME **60** which correspond to the UEs **2, 4** and **5** served by the relay node **RN1.** Thus, path switch can be executed for only particular UEs simply by transmitting the relay node ID and a bit map. This can improve the problem with the prior art that a large number of UE IDs need to be carried in a message to make the message lengthy and the data massive.

Refer to **FIG. 1B****,** **FIG. 3A****,** **FIG. 3B** and **FIG. 5** for a fifth embodiment of the present invention. The fifth embodiment is also adapted for use in the network system **3** shown in **FIG. 3A****.** The fifth embodiment differs from the third embodiment in how to change the original PDN connection. Briefly speaking, the P-GW used by the original PDN connection is not changed in the third embodiment; however, in the fifth embodiment, the P-GW used by the PDN connection will also be changed.

In this embodiment, the relay node **RN** moves from a position **P1** to a position **P2,** and then moves from the position **P2** to a position **P3.** As the procedures that need to be executed when the relay node **RN** moves from the position **P1** to the position **P2** have been described in the fourth embodiment, the following description will focus on only procedures that need to be executed when the relay node **RN** moves from the position **P2** to the position **P3.** Therefore, the base stations **10, 20, 30** may be viewed as an initial base station, a source base station and a target base station respectively.

When the relay node **RN** is at the position **P2,** the relay node **RN** and the UEs served by the relay node **RN** use the PDN connections **C2, C5** as shown in **FIG. 1****B.** Both the PDN connections **C2, C5** are formed among the UE-SGW **40,** the relay gateway **21,** the P-GW **23,** the S-GW **25,** the eNode B **27** and the relay node **RN.**

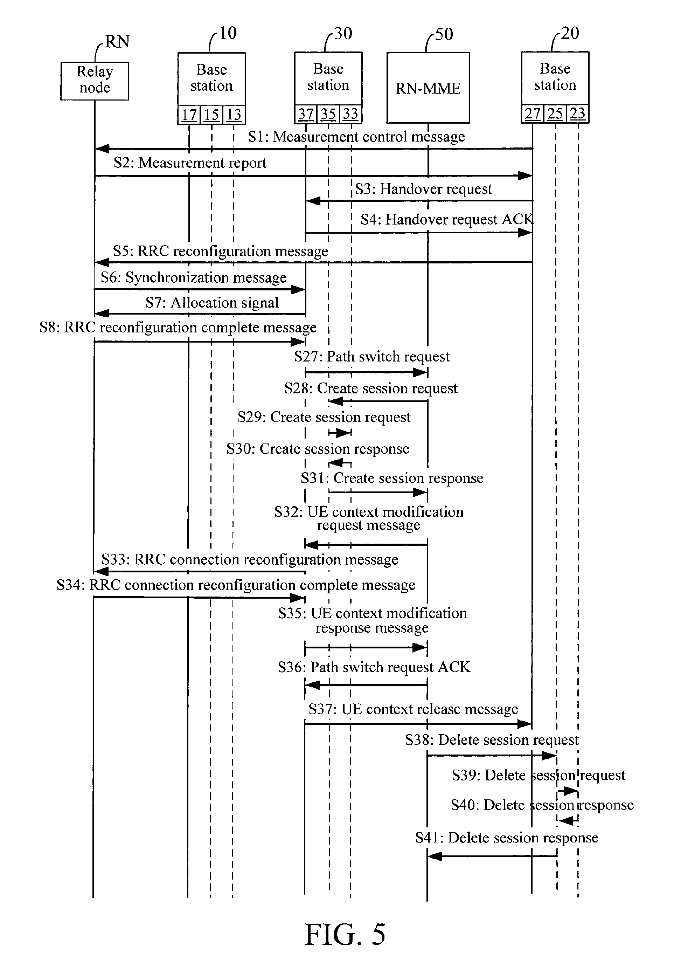

Referring to **FIG. 5****,** as the signals **S1∼S8** described in the third embodiment a handover procedure is also executed through the signals **S1∼S8** in this embodiment, and this will not be further described herein. The UE-SGW **40,** the RN-MME **50,** the UE-MME **60,** the S-GW **15,** the P-GW **13,** the eNode B **37,** the S-GW **35,** the P-GW **33,** the eNode B **27** and the relay node **RN** execute a relay node path switch procedure through use of signals **S27∼S45.** In this embodiment, the signals **S27∼S36** are changed from being associated with the base station **20** to being associated with the base station **30;** so no further description will be made thereon.

In this embodiment, the UE context release message **S37** is transmitted by the eNode B **37** of the base station **30** to the eNode B **27** of the base station **20.** The delete session request **S38** is transmitted by the RN-MME **50** to the S-GW **25.** Then, the delete session request **S39** is transmitted by the S-GW **25** to the P-GW **23.** After that, the delete session response **S40** is transmitted by the P-GW **23** to the S-GW **25,** and the delete session response **S41** is transmitted by the S-GW **25** to the RN-MME **50.** Wherein the functions of the signals **S38∼S41** are same with whose of the signals **S38∼S41** described in the fourth embodiment, so no further description will be made thereon. In addition, the signals **S41∼S45** are same with which described in **FIG. 4****,** so no further description will be made thereon and no further drawing in the **FIG. 5****.**

Through execution of the signals **S1∼S8** and **S27∼S45,** the original PDN connections **C2, C5** can be changed into a PDN connection **C6** formed among the UE-SGW **40,** the relay gateway **31,** the P-GW **33,** the S-GW **35,** the eNode B **37** and the relay node **RN.**

It shall be appreciated that, in the first to the fifth embodiments, a tracking area update procedure may further be executed by the target base station (the base station **20** or **30)** or the relay node **RN;** i.e., in which base station coverage the relay node **RN** is currently located can be confirmed by the target base station or the relay node **RN.**

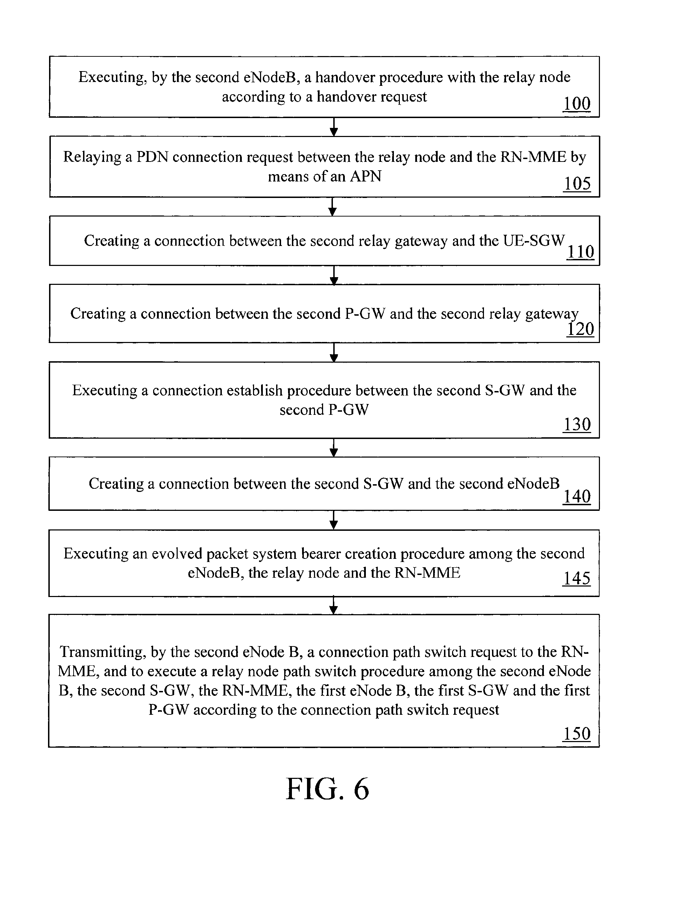

A sixth embodiment of the present invention is a transmission path creation method, a flowchart diagram of which is depicted in **FIG. 6****.** The transmission path creation method is adapted for use in a base station serving as a target base station. A network system comprises a target base station, a relay node, a UE-SGW, an RN-MME and an initial base station (which also serves as a source base station). The initial base station comprises a first relay gateway, a first P-GW, a first S-GW and a first eNode B. A first PDN connection is formed among the UE-SGW, the first relay gateway, the first P-GW, the first S-GW, the first eNode B and the relay node. The relay node communicates data with the UE-SGW via the first PDN connection originally. The target base station comprises a second eNode B, a second relay gateway, a second P-GW and a second S-GW.

Firstly, step **100** is executed to execute, by the second eNode B, a handover procedure (e.g., the signals **S1∼S8** in the aforesaid embodiments) with the relay node according to a handover request. Then, step **105** is executed to relay, by the second eNode B, a PDN connection request between the relay node and the RN-MME by means of an APN. Subsequently, step **110** is executed to create a connection between the second relay gateway and the UE-SGW. Further, step **120** is executed to create a connection between the second P-GW and the second relay gateway. Next, step **130** is executed to execute a connection establish procedure between the second S-GW and the second P-GW. Thereafter, step **140** is executed to create a connection between the second S-GW and the second eNode B. Then, step **145** is executed to execute an evolved packet system bearer creation procedure among the second eNode B, the relay node and the RN-MME. It shall be particularly appreciated herein that, the steps **105∼145** can be accomplished through the signals **S18∼S26** described in the second embodiment when the network system conforms to the LTE standard.

After the step **145** is executed, a second PDN connection is formed among the UE-SGW, the second relay gateway, the second P-GW, the second S-GW, the second eNode B and the relay node so that the relay node communicates data with the UE-SGW via the second PDN connection after the handover procedure.

Furthermore, step **150** is further executed to transmit, by the second eNode B, a connection path switch request to the RN-MME, and to execute a relay node path switch procedure among the second eNode B, the second S-GW, the RN-MME, the first eNode B, the first S-GW and the first P-GW according to the connection path switch request. Thus, the first PDN connection is changed to be formed among the UE-SGW, the first relay gateway, the first P-GW, the second S-GW, the second eNode B and the relay node instead. It shall be particularly appreciated herein that, the step **150** can be accomplished through execution of the signals **S9∼S17** described in the second embodiment when the network system conforms to the LTE standard.

A seventh embodiment of the present invention is also a transmission path creation method, a flowchart diagram of which is also depicted in **FIG. 6****.** The transmission path creation method is also adapted for use in a base station serving as a target base station, but is applied in scenarios where the source base station and the initial base station are different base stations.

A network system comprises a target base station, a relay node, a UE-SGW, an RN-MME, an initial base station and a source base station. The initial base station comprises a first relay gateway and a first P-GW, and the source base station comprises a first S-GW and a first eNode B. A first PDN connection is formed among the UE-SGW, a first relay gateway, the first P-GW, the first S-GW, the first eNode B and the relay node. The relay node communicates data with the UE-SGW via the first PDN connection originally. Furthermore, the target base station comprises a second eNode B, a second relay gateway, a second P-GW and a second S-GW.

Steps **100∼145** of the transmission path creation method of this embodiment are the same as those of the sixth embodiment. After the step **145** is executed, a second PDN connection is formed among the UE-SGW, the second relay gateway, the second P-GW, the second S-GW, the second eNode B and the relay node so that the relay node communicates data with the UE-SGW via the second PDN connection after the handover procedure.

Furthermore, step **150** is further executed to transmit, by the second eNode B, a connection path switch request to the RN-MME, and to execute a relay node path switch procedure among the second eNode B, the second S-GW, the RN-MME, the first eNode B, the first S-GW and the first P-GW according to the connection path switch request. It shall be particularly appreciated that, in this embodiment, the first PDN connection is changed to be formed among the UE-SGW, the first relay gateway comprised in the initial base station, the first P-GW comprised in the initial base station, the second S-GW, the second eNode B and the relay node instead. It shall be particularly appreciated herein that, the step **150** can be accomplished through execution of the signals **S9∼S17** described in the third embodiment when the network system conforms to the LTE standard.

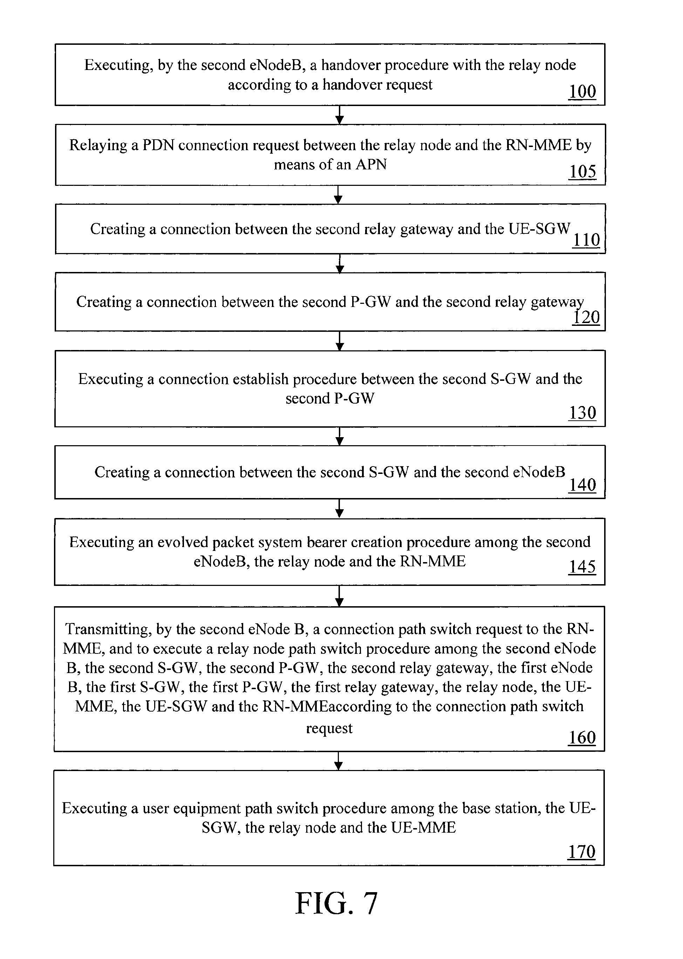

An eighth embodiment of the present invention is a transmission path creation method, a flowchart diagram of which is depicted in **FIG. 7****.** The transmission path creation method is adapted for use in a base station serving as a target base station. A network system comprises a target base station, a relay node, a UE-SGW, an RN-MME, a UE-MME and an initial base station (which also serves as a source base station). The initial base station comprises a first relay gateway, a first P-GW, a first S-GW and a first eNode B. A first PDN connection is formed among the UE-SGW, the first relay gateway, the first P-GW, the first S-GW, the first eNode B and the relay node. The relay node communicates data with the UE-SGW via the first PDN connection originally. The target base station comprises a second relay gateway, a second eNode B, a second P-GW and a second S-GW.

In the transmission path creation method of this embodiment, steps **100∼145** are firstly executed. The steps **100∼145** are the same as those of the sixth and the seventh embodiments and, thus, will not be further described herein. After the step **145** is executed, a second PDN connection is formed among the UE-SGW, the second relay gateway, the second P-GW, the second S-GW, the second eNode B and the relay node so that the relay node communicates data with the UE-SGW via the second PDN connection after the handover procedure.

Furthermore, step **160** is further executed to transmit, by the second eNode B, a connection path switch request to the RN-MME, and to execute a relay node path switch procedure among the second eNode B, the second S-GW, the second P-GW, the second relay gateway, the first eNode B, the first S-GW, the first P-GW, the first relay gateway, the relay node, the UE-MME, the UE-SGW and the RN-MME according to the connection path switch request so that the first PDN connection is changed to be formed among the UE-SGW, the second relay gateway, the second P-GW, the second S-GW, the second eNode B and the relay node instead.

Further speaking, the relay node can serve a plurality of UEs which communicate data with the UE-SGW via the first P-GW and the first S-GW originally.

It shall be appreciated that, in this embodiment, the data transmission paths of the UEs served by the relay node must be adjusted because the P-GW used by the first PDN connection has been changed into the second P-GW. Specifically, step **170** is further executed to execute a user equipment path switch procedure among the target base station, the UE-SGW, the relay node and the UE-MME according to a user equipment path switch request carrying a relay node ID. Through the user equipment path switch procedure, the UEs change to communicate data with the UE-SGW via the second P-GW and the second S-GW instead.

Furthermore, the user equipment path switch request may further carry a bit map so that the UE-MME can learn serial numbers of individual UEs whose paths need to be switched. For example, the relay node serves a first UE and a second UE; and if the user equipment path switch procedure only needs to be executed on the first UE, then a serial number corresponding to the first UE can be transmitted through the bit map. It shall be particularly appreciated herein that, the steps **100∼145,, 160** and the step **170** can be accomplished through execution of the signals **S1∼S45** described in the fourth embodiment when the network system conforms to the LTE standard.

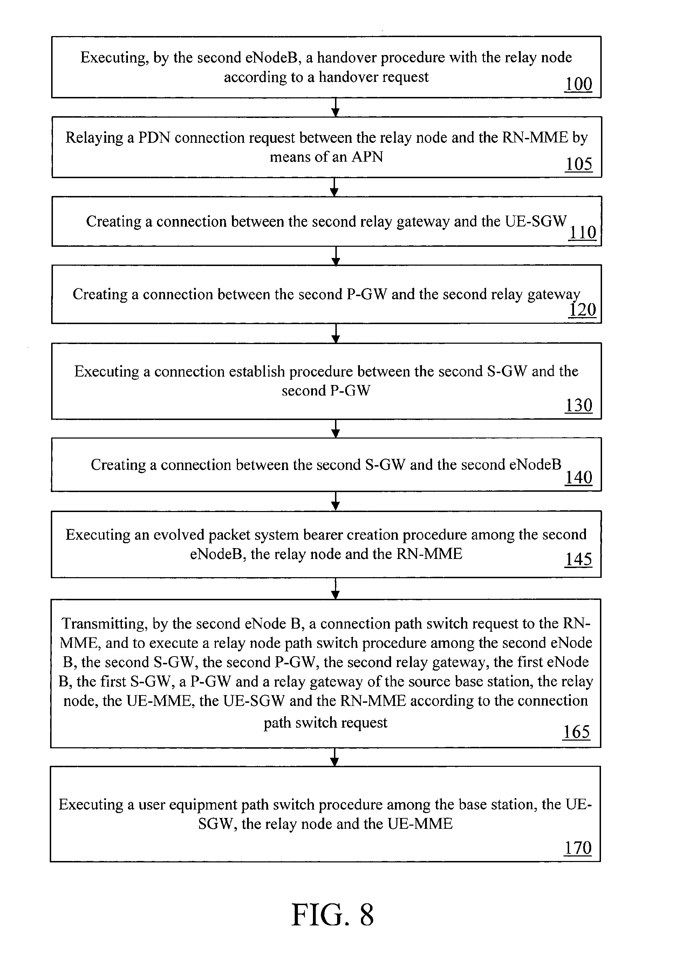

A ninth embodiment of the present invention is also a transmission path creation method, a flowchart diagram of which is also depicted in **FIG. 8****.** The transmission path creation method is adapted for use in a base station serving as a target base station. A network system comprises a target base station, a relay node, a UE-SGW, an RN-MME, a UE-MME, an initial base station and a source base station. The initial base station comprises a first relay gateway and a first P-GW, and the source base station comprises a first S-GW and a first eNode B.

A first PDN connection is formed among the UE-SGW, a first relay gateway, the first P-GW, the first S-GW, the first eNode B and relay node. The relay node communicates data with the UE-SGW via the first PDN connection originally. The target base station comprises a second eNode B, a second relay gateway, a second P-GW and a second S-GW.

In the transmission path creation method of this embodiment, steps **100∼145** are also executed firstly. The steps **100∼145** are the same as those of the sixth, the seventh and the eighth embodiments and, thus, will not be further described herein. Thereafter, a second PDN connection is formed among the UE-SGW, the second relay gateway, the second P-GW, the second S-GW, the second eNode B and the relay node so that the relay node communicates data with the UE-SGW via the second PDN connection after the handover procedure.

Furthermore, step **165** is further executed to transmit, by the second eNode B, a connection path switch request to the RN-MME, and to execute a relay node path switch procedure among the second eNode B, the second S-GW, the second P-GW, the second relay gateway, the first eNode B, the first S-GW, a P-GW of the source base station, a relay gateway of the source base station, the relay node, the UE-MME, the UE-SGW and the RN-MME according to the connection path switch request. Through the step 165, the first PDN connection is changed to be formed among the UE-SGW, the second relay gateway, the second P-GW, the second S-GW, the second eNode B and the relay node instead.

Further speaking, the relay node can serve a plurality of UEs which communicate data with the UE-SGW via the first P-GW and the first S-GW originally.

It shall be appreciated that, in this embodiment, the data transmission paths of the UEs served by the relay node must be adjusted because the P-GW used by the first PDN connection has been changed into the second P-GW. Specifically, step 170 is further executed to execute a user equipment path switch procedure among the target base station, the UE-SGW, the relay node and the UE-MME according to a user equipment path switch request carrying a relay node ID. Through the user equipment path switch procedure, the UEs change to communicate data with the UE-SGW via the second P-GW and the second S-GW instead.

It shall be additionally appreciated that, the steps **100∼145, 165** and **170** can be accomplished through execution of the signals **S1∼S45** described in the fifth embodiment when the network system conforms to the LTE standard.

According to the above descriptions, the base station and the transmission path creation method thereof of the present invention can minimize the connection path, and this can prevent the connection path from increasing with the distance from the initial base station in an environment moving at a high speed. With the solutions of the present invention, information can be transmitted more efficiently via a shorter transmission path even in the environment moving at a high speed.

The above disclosure is related to the detailed technical contents and inventive features thereof. People skilled in this field may proceed with a variety of modifications and replacements based on the disclosures and suggestions of the invention as described without departing from the characteristics thereof. Nevertheless, although such modifications and replacements are not fully disclosed in the above descriptions, they have substantially been covered in the following claims as appended.

## Claims

1. A base station for use in a network system, the network system comprising the base station, a relay node, a user equipment serving gateway (UE-SGW), a first relay node mobility management entity (RN-MME), a first relay gateway, a first packet data network gateway (P-GW), a first serving gateway (S-GW) and a first E-UTRAN Node B (eNode B), a first packet data network (PDN) connection being formed among the UE-SGW, the first relay gateway, the first P-GW, the first S-GW and the first eNode B, and the relay node communicating data with the UE-SGW via the first PDN connection, the base station comprising:
a second eNode B, being configured to execute a handover procedure with the relay node according to a handover request;
a second relay gateway, being configured to create a connection with the UE-SGW after the handover procedure;
a second P-GW, being configured to create a connection with the second relay gateway after the handover procedure; and
a second S-GW, being configured to execute a connection establish procedure with the second P-GW and to create a connection with the second eNode B after the handover procedure so that the relay node communicates data with the UE-SGW via a second PDN connection after the handover procedure, wherein the second PDN connection is formed among the UE-SGW, the second relay gateway, the second P-GW, the second S-GW, the second eNode B, and the relay node.

2. The base station as claimed in claim 1, wherein the network system further comprises an initial base station which comprises a first relay gateway, the first P-GW, the first S-GW and the first eNode B;
wherein the handover request is from the initial base station, and the handover procedure is further executed between the second eNode B and the initial base station.

3. The base station as claimed in claim 1, wherein the network system further comprises an initial base station and a source base station, the initial base station comprises a first relay gateway, the first P-GW, and the source base station comprises the first S-GW and the first eNode B;
wherein the handover request is from the source base station, and the handover procedure is further executed between the second eNode B and the source base station.

4. The base station as claimed in claim 1, wherein the second PDN connection has an access point name (APN), the second eNode B further relays a PDN connection request between the relay node and the RN-MME by means of the APN so that the second S-GW and the second P-GW execute the connection establish procedure, and the second eNodeB, the relay node and the RN-MME further executes an evolved packet system bearer creation procedure after the connection establish procedure.

5. The base station as claimed in claim 4, wherein the second eNode B further transmits a connection path switch request to the RN-MME, and the second eNode B, the second S-GW, the RN-MME and the first P-GW further execute a relay node path switch procedure according to the connection path switch request so that the first PDN connection is changed to be formed among the UE-SGW, the first relay gateway, the first P-GW, the second S-GW and the second eNode B instead.

6. The base station as claimed in claim 1, wherein the second eNode B further transmits a connection path switch request to the RN-MME, and the second eNode B, the second S-GW, the second P-GW, a first relay gateway, the relay node, the UE-SGW and the RN-MME further execute a relay node path switch procedure according to the connection path switch request so that the first PDN connection is changed to be formed among the UE-SGW, the second relay gateway, the second P-GW, the second S-GW and the second eNode B instead.

7. The base station as claimed in claim 6, wherein the network system further comprises a user equipment mobility management entity (UE-MME), the relay node serves a plurality of pieces of user equipment (UEs) which communicate data with the UE-SGW via the first relay gateway, the first P-GW and the first S-GW, and the relay gateway further executes a user equipment path switch procedure with the relay node, the UE-SGW and the UE-MME according to a user equipment path switch request carrying a relay node identification (ID) so that the UEs change to communicate data with the UE-SGW via the second relay gateway, the second P-GW and the second S-GW instead.

8. The base station as claimed in claim 6, wherein the network system further comprises a UE-MME, the relay node serves a first UE and a second UE, the first UE and the second UE communicate data with the UE-SGW via the first relay gateway, the first P-GW and the first S-GW, and the relay gateway further executes a user equipment path switch procedure with the relay node, the UE-SGW and the UE-MME according to a user equipment path switch request so that the first UE changes to communicate data with the UE-SGW via the second relay gateway, the second P-GW and the second S-GW instead, wherein the user equipment path switch request carries a relay node ID and a bit map that corresponds to the first UE.

9. A transmission path creation method adapted for use in a base station of a network system, the network system comprising the base station, a relay node, a UE-SGW, an RN-MME, a first relay gateway, a first P-GW, a first S-GW and a first eNode B, a first PDN connection being formed among the UE-SGW, the first relay gateway, the first P-GW, the first S-GW and the first eNode B, a first PDN connection being formed among the UE-SGW, the first relay gateway, the first P-GW, the first S-GW and the first eNode B, and the relay node communicating data with the UE-SGW via the first PDN connection, the base station comprising a second eNode B, a second relay gateway, a second P-GW and a second S-GW, the transmission path creation method comprising the following steps of:
executing, by the second eNode B, a handover procedure with the relay node according to a handover request;
creating a connection between the second relay gateway and the UE-SGW after the handover procedure;
creating a connection between the second P-GW and the second relay gateway after the handover procedure;
executing a connection establish procedure between the second S-GW and the second P-GW after the handover procedure;
creating a connection between the second S-GW and the second eNode B after the handover procedure so that the relay node communicates data with the UE-SGW via a second PDN connection after the handover procedure, wherein the second PDN connection is formed among the UE-SGW, the second relay gateway, the second P-GW, the second S-GW, the second eNode B and the relay node.

10. The transmission path creation method as claimed in claim 9, wherein the network system further comprises an initial base station which comprises a first relay gateway, the first P-GW, the first S-GW and the first eNode B;
wherein the handover request is from the initial base station, and the handover procedure is further executed between the second eNode B and the initial base station.

11. The transmission path creation method as claimed in claim 9, wherein the network system further comprises an initial base station and a source base station, the initial base station comprises a first relay gateway, the first P-GW, and the source base station comprises the first S-GW and the first eNode B;
wherein the handover request is from the source base station, and the handover procedure is further executed between the second eNode B and the source base station.

12. The transmission path creation method as claimed in claim 9, wherein the second PDN connection has an access point name (APN), the transmission path creation method further comprising the following steps of:
relaying a PDN connection request between the relay node and the RN-MME by means of the APN after the handover procedure so that the second S-GW and the second P-GW execute the connection establish procedure;
executing an evolved packet system bearer creation procedure among the second eNodeB, the relay node and the RN-MME after the connection establish procedure.

13. The transmission path creation method as claimed in claim 12, further comprising the following steps of:
transmitting, by the second eNode B, a connection path switch request to the RN-MME; and
executing a relay node path switch procedure among the second eNode B, the second S-GW, the RN-MME and the first P-GW according to the connection path switch request so that the first PDN connection is changed to be formed among the UE-SGW, the first relay gateway, the first P-GW, the second S-GW and the second eNode B instead.

14. The transmission path creation method as claimed in claim 9, further comprising the following steps of:
transmitting, by the second eNode B, a connection path switch request to the RN-MME; and
executing a relay node path switch procedure among the second eNode B, the second S-GW, the second P-GW, the second relay gateway, the relay node, the UE-SGW and the RN-MME according to the connection path switch request so that the first PDN connection is changed to be formed among the UE-SGW, the second relay gateway, the second P-GW, the second S-GW and the second eNode B instead.

15. The transmission path creation method as claimed in claim 14, wherein the network system further comprises a UE-MME, the relay node serves a plurality of UEs which communicate data with the UE-SGW via the first relay gateway, the first P-GW and the first S-GW, and the transmission path creation method further comprises the following step of:
executing a user equipment path switch procedure among the base station, the UE-SGW, the relay node and the UE-MME according to a user equipment path switch request carrying a relay node ID so that the UEs change to communicate data with the UE-SGW via the second relay gateway, the second P-GW and the second S-GW instead.

16. The transmission path creation method as claimed in claim 14, wherein the network system further comprises a UE-MME, the relay node serves a first UE and a second UE, the first UE and the second UE communicate data with the UE-SGW via the first relay gateway, the first P-GW and the first S-GW, and the transmission path creation method further comprises the following step of:
executing a user equipment path switch procedure among the base station, the UE-SGW, the relay node and the UE-MME according to a user equipment path switch request so that the first UE changes to communicate data with the UE-SGW via the second relay gateway, the second P-GW and the second S-GW instead, wherein the user equipment path switch request carries a relay node ID and a bit map that corresponds to the first UE.
